**Europäisches Patentamt**

**European Patent Office**

**Office européen des brevets**

(19)

(11) Numéro de publication : **0 284 496 B1**

(12) # FASCICULE DE BREVET EUROPEEN

(45) Date de publication du fascicule du brevet :
**29.01.92 Bulletin 92/05**

(51) Int. Cl.$^5$ : **F16J 15/32**

(21) Numéro de dépôt : **88400631.3**

(22) Date de dépôt : **16.03.88**

(54) **Bague d'étanchéité de type radial.**

(30) Priorité : **16.03.87 FR 8703557**

(43) Date de publication de la demande :
**28.09.88 Bulletin 88/39**

(45) Mention de la délivrance du brevet :
**29.01.92 Bulletin 92/05**

(84) Etats contractants désignés :
**DE ES GB IT**

(56) Documents cités :
**EP-A- 123 724**
**FR-A- 2 585 103**
**GB-A- 2 096 246**
**GB-A- 2 146 710**
**US-A- 4 451 050**

(73) Titulaire : **PROCAL, Société anonyme dite**
**Les Franchises**
**F-52200 Langres (FR)**

(72) Inventeur : **Fougerolle, Fabrice**
**Montlandon**
**F-52600 Chalindrey (FR)**
Inventeur : **Saxod Michel**
**Bourg**
**F-52200 Langres (FR)**
Inventeur : **Meneroux, Paul**
**Lotissement "Les Groseillers" Peigney**
**F-52200 Langres (FR)**

(74) Mandataire : **Nony, Michel et al**
**Cabinet NONY & CIE, 29, rue Cambacérès**
**F-75008 Paris (FR)**

EP 0 284 496 B1

## Description

La présente invention est relative à une bague d'étanchéité de type radial, comportant une armature, un corps, notamment en élastomère, et une lèvre d'étanchéité annulaire en matériau à faible frottement, notamment en résine fluorée, telle qu'en particulier le polytétrafluoréthylène (PTFE), adhérisée sur ledit corps et saillant radialement depuis celui-ci.

Une bague d'étanchéité de ce type ainsi que son procédé de réalisation sont par exemple décrits dans le brevet français FR-A-2585103 de la société déposante.

Il est par ailleurs connu de munir les lèvres d'étanchéité de bagues de type radial de stries d'orientation sous forme d'encoches ou de nervures, ces stries constituant des moyens hydrodynamiques pour améliorer l'étanchéité de la bague. Ces stries sont réalisées sur le côté de la lèvre exposé à l'air, c'est-à-dire le côté opposé à celui exposé au fluide vis-à-vis duquel l'étanchéité doit être réalisée.

De nombreuses configurations de stries ont déjà été proposées mais n'ont pas permis d'obtenir de résultats totalement satisfaisants, soit que l'on constatait un défaut d'étanchéité et donc une fuite rapide d'huile, soit que l'on constatait au contraire une aspiration d'air trop importante.

Ainsi EP-A-0123724 et GB-A-2146710 décrivent des bagues comportant des stries d'orientation débouchant à la périphérie intérieure de la surface d'étanchéité de la lèvre d'étanchéité entraînant notamment des fuites d'huile au repos.

La présente invention se propose de fournir une bague d'étanchéité du type mentionné dans le préambule, comportant sur le côté exposé à l'air de la lèvre d'étanchéité des stries d'orientation sous forme d'encoches, ladite bague, grâce à la configuration particulière desdites stries, évitant notamment les inconvénients mentionnés ci-dessus.

Selon l'invention et conformément à la partie caractérisante de la revendication 1, il est prévu, dans la lèvre d'étanchéité dont la surface d'étanchéité s'étend jusqu'au périmètre intérieur, une pluralité d'encoches présentant chacune la forme d'un segment de spirale, lesdites encoches étant identiques, équidistantes circonférentiellement et s'étendant à l'intérieur d'une zone en forme de couronne délimitée par des cercles concentriques constituant les lieux géométriques des extrémités intérieures et respectivement extérieures des encoches le cercle intérieur étant espacé du périmètre intérieur de la surface d'étanchéité de la lèvre.

Ainsi, aucune des encoches ne débouche au niveau du périmètre intérieur de la lèvre d'étanchéité, le cercle que constitue le lieu géométrique des extrémités intérieures des encoches en forme de segments de spirale se trouvant à une certaine distance par exemple de l'ordre de quelques diziènes de millimètres du bord interne circulaire de la lèvre.

De préférence la zone en forme de couronne à l'intérieur de laquelle sont formées les encoches est réalisée dans une partie annulaire épaissie de la lèvre s'étendant à partir de son périmètre intérieur.

Selon l'invention, le nombre d'encoches en forme de segments de spirale peut être quelconque mais supérieur à trois, ce nombre pour des raisons techniques de fabrication étant avantageusement un diviseur de 360. Dans un exemple particulier de réalisation, il est prévu 36 encoches.

Dans le but de mieux faire comprendre l'invention, on va maintenant en décrire à titre d'exemple nullement limitatif, un mode de réalisation en se référant au dessin annexé dans lequel :
- la figure 1 représente en demi-coupe une bague selon l'invention,
- la figure 2 est une vue en plan de la lèvre d'étanchéité de la bague de la figure 1 à l'état de rondelle avant son adhérisation au corps de la bague, et
- la figure 3 est une vue en coupe selon III-III de la figure 2.

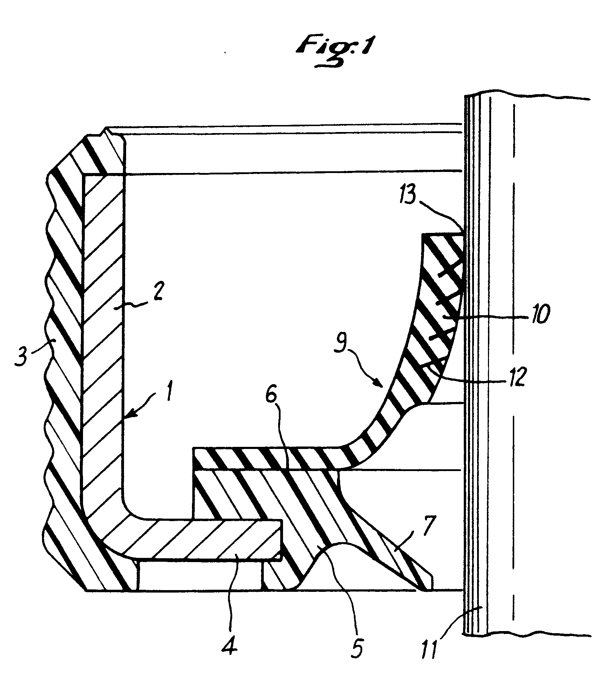

La bague selon l'invention illustrée à la figure 1 comporte une armature annulaire métallique 1, en forme de L, présentant une branche longue 2 sur laquelle est adhérisé un revêtement en élastomère 3 destiné à venir en contact de la paroi de l'alésage dans lequel est montée la bague, et une branche courte 4 sur laquelle est adhérisé un corps en élastomère 5 présentant une portée supérieure plane 6 et un prolongement 7 d'un seul tenant constituant une lèvre secondaire anti-poussière.

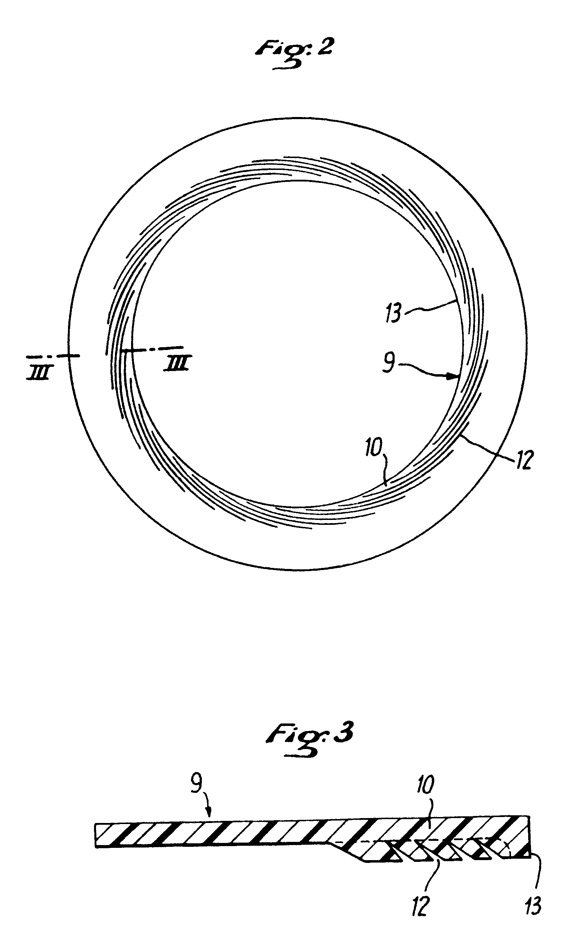

La bague selon l'invention comporte une lèvre d'étanchéité en résine fluorée telle que du PTFE 9 adhérisée sur la portée supérieure 6 du corps, ladite lèvre 9 présentant une surépaisseur d'extrémité 10 destinée à venir au contact d'un arbre rotatif 11. Dans sa surépaisseur, la lèvre 9 comporte des stries d'orientation sous forme d'encoches 12 dont la disposition sera expliquée en référence aux figures 2 et 3. Ces stries d'orientation 12 sont réalisées sur la face de la lèvre exposée à l'air, c'est-à-dire, sur la figure 1, la face par laquelle la lèvre est en contact avec l'arbre 11.

Une telle bague peut être réalisée par moulage par injection comme décrit dans le brevet FR-A-2 585 103 de la société déposante.

La lèvre d'étanchéité introduite dans le moule à l'état de préforme annulaire présente comme illustré aux figures 2 et 3 des encoches, au nombre de 36 dans l'exemple illustré, présentant chacune la forme d'un segment de spirale. Ces encoches sont réalisées dans la surépaisseur 10 de la lèvre, sont identiques entre elles, c'est-à-dire ont la même forme, la même longueur et la même profondeur et sont équidistantes circonférentiellement. Elles s'étendent à l'intérieur d'une zone en forme de couronne dont le périmètre intérieur est espacé du périmètre intérieur 13 de la lèvre.

En d'autres termes, le cercle constituant le lieu géométrique des extrémités intérieures des encoches 12 est espacé du bord interne circulaire 13 de la lèvre, de sorte qu'aucune des encoches ne débouche au niveau du périmètre intérieur de la lèvre. Dans un mode particulier de réalisation, la distance, mesurée radialement, entre les cercles définissant les lieux géométriques des extrémités des encoches en forme de segments de spirale, est de 3,5 mm, le cercle interne étant à une distance de 0,5 mm du périmètre interne 13 de la lèvre. Les fonds des encoches 12 sont espacés entre eux d'une distance de 0,7 mm.

**Revendications**

1. Bague d'étanchéité de type radial, comportant une armature (1), un corps (5), notamment en élastomère, et une lèvre d'étanchéité (9) annulaire en matériau à faible frottement, notamment en résine fluorée, telle qu'en particulier le polytétrafluoréthylène (PTFE), adhérisée sur ledit corps et saillant radialement depuis celui-ci, ladite lèvre comportant sur son côté exposé à l'air des stries d'orientation sous forme d'encoches (12), caractérisée par le fait que la lèvre d'étanchéité (9) comporte, dans la région desdites encoches (12), une surface d'étanchéité s'étendant jusqu'au périmètre interieur (13) de celle-ci, que lesdites d'encoches (12) présentent chacune la forme d'un segment de spirale, sont identiques, équidistantes circonférentiellement et s'étendent à l'intérieur d'une zone en forme de couronne délimitée par des cercles concentriques constituant les lieux géométriques des extrémités intérieures et respectivement extérieures des encoches (12), le cercle intérieur étant espacé du périmètre intérieur (13) de la surface d'étanchéité de la lèvre.

2. Bague selon la revendication 1, caractérisée par le fait que la zone en forme de couronne à l'intérieur de laquelle sont formées les encoches (12) est réalisée dans une partie annulaire épaissie (10) de la lèvre s'étendant à partir de son périmètre intérieur (13).

3. Bague selon l'une quelconque des revendications 1 et 2, caractérisée par le fait qu'elle comporte au moins trois encoches.

4. Bague selon l'une quelconque des revendications précédentes, caractérisée par le fait que le nombre d'encoches est un diviseur de 360.

5. Bague selon l'une quelconque des revendications précédentes, caractérisée par le fait qu'elle comporte 36 encoches.

**Patentansprüche**

1. Radial-Dichtring, mit einer Armierung (1), einem Körper (5) insbesondere aus Elastomer, und einer ringförmigen Dichtlippe (9) aus einem Material geringer Reibung insbesondere aus Fluorkunststoff, wie speziell Polytetrafluorethylen, die an dem Körper haftet und radial aus ihm herausragt, wobei die Lippe auf ihrer der Luft ausgesetzten Seite gerichtete Rillen in Form von Kerben (12) aufweist, dadurch gekennzeichnet, daß die Dichtlippe (9) im Abschnitt der genannten Kerben (12) eine sich bis zu ihrem inneren Umfang (13) erstreckende Dichtfläche aufweist, daß die Kerben (12), die jede die Form eines Spiralsegments zeigen, identisch und äquidistant in Umfangsrichtung sind und sich innerhalb einer kranzförmigen Zone erstrecken, die durch konzentrische Kreise begrenzt ist, die die geometrischen Orte der inneren und entsprechenderweise äußeren Enden der Kerben (12) bilden, wobei der innere Kreis einen Abstand vom inneren Umfang (13) der Dichtfläche der Lippe aufweist.

2. Ring nach Anspruch 1, dadurch gekennzeichnet, daß sich die kranzförmige Zone, in deren Inneren die Kerben (12) ausgebildet sind, in einer ringförmigen Verdickung (10) der Lippe befindet, die sich beginnend vom inneren Umfang (13) aus erstreckt.

3. Ring nach Anspruch 1 oder 2, dadurch gekennzeichnet, daß er mindestens drei Kerben aufweist.

4. Ring nach einem der vorhergehenden Ansprüche, dadurch gekennzeichnet, daß die Zahl der Kerben ein Teiler von 360 ist.

5. Ring nach einem der vorhergehenden Ansprüche, dadurch gekennzeichnet, daß er 36 Kerben aufweist.

**Claims**

1. Radial-type sealing ring, comprising a strength member (1), a body (5), especially made of elastomer and an annular sealing lip (9) made of low friction material, especially a fluorinated resin, such as in particular polytetrafluoroethylene (PTFE), made to adhere to the said body and projecting radially from the latter, the said lip comprising, on its side exposed to the air, orientation serrations in the form of notches (12), characterised in that the sealing lip (9) comprises, in the region of the said notches (12), a sealing surface extending right up to the inner perimeter (13) of the latter, in that the said notches (12) each have the shape of a segment of a spiral, are identical and circumferentially equidistant and extend within a crown-shaped zone delimited by concentric circles constituting the geometric locations of the inner and outer extremities respectively of the notches (12), the inner circle being set back from the inner perimeter (13) of the sealing surface of the lip.

2. Ring according to Claim 1, characterised in that the crown-shaped zone within which the notches (12) are formed is produced in a thickened annular portion (10) of the lip extending from its inner perimeter (13).

3. Ring according to either of claims 1 and 2, characterised in that it comprises at least three notches.

4. Ring according to any of the preceding claims, characterised in that the number of notches is a divisor of 360.

5. Ring according to any of the preceding claims, characterised in that it comprises 36 notches.

# Fig:1

*Fig. 2*

*Fig. 3*